# EUROPÄISCHE PATENTSCHRIFT

(11) **EP 2 133 722 B1**
(45) Veröffentlichungstag und Bekanntmachung des Hinweises auf die Patenterteilung: **21.09.2011**
(21) Anmeldenummer: 09162408.0
(22) Anmeldetag: 10.06.2009
(51) Int. Cl.: B60Q 1/04, G02B 7/02

(54) **Optisches System mit einer Einrichtung zur Kompensation thermischer Einflüsse**
Optical system with a device for compensating for thermal influences
Système optique doté d'un dispositif de compensation des influences thermiques

(30) Priorität: 11.06.2008 DE 102008027721
(43) Veröffentlichungstag der Anmeldung: 16.12.2009
(73) Patentinhaber: Hella KGaA Hueck & Co., 59552 Lippstadt (DE)
(72) Erfinder: Kalwa, Matthias, 59555 Lippstadt (DE)

(56) Entgegenhaltungen:
- EP-A- 1 586 927
- DE-A1-102005 039 561
- JP-A- 57 208 516
- JP-A- 2003 185 904
- US-A- 1 325 936
- US-A- 5 557 474

## Beschreibung

Die vorliegende Erfindung richtet sich auf ein optisches System mit einem optischen Mittel, das mit wenigstens einer optischen Linse zusammenwirkt, die durch eine Trägeranordnung in einem Abstand über dem optischen Mittel aufgenommen ist. Entlang einer optischen Achse erstreckt sich ein Strahlengang, der durch die optische Linse in der Ebene des optischen Mittels einen Fokus aufweist. Derartige optische Systeme kommen in Kraftfahrzeugen zum Einsatz und können beispielsweise als Kamerasystem zur Bilderfassung oder als Projektionsscheinwerfer ausgeführt sein. Unabhängig von der spezifischen Ausführung des optischen Systems wird die optische Linse oder die optischen Linsen zur Bildung eines Objektivs mit der Trägeranordnung über dem optischen Mittel positioniert. Hierbei kann es sich um ein Lichtmodul in einem Scheinwerfer handeln, wobei derartige Aufbauten auch für Kamerasysteme zum Einsatz kommen, die beispielsweise hinter der Frontscheibe des Kraftfahrzeuges angeordnet werden und zur Bilderfassung dienen.

Durch die Trägeranordnung des optischen Systems wird die wenigstens eine optische Linse in einem festen Abstand über dem optischen Mittel positioniert, wobei das Objektiv zur Fokussierung des Strahlengangs dient und die Fokalebene auf der Ebene des optischen Mittels liegt.

Bei derartigen optischen Systemen tritt das Problem auf, dass durch thermische Einflüsse der Abstand zwischen dem optischen Mittel und dem Objektiv beeinflusst wird. Bei einer Erwärmung des optischen Systems dehnt sich das Material der Trägeranordnung aus, und der Abstand zwischen dem optischen Mittel und der Linse vergrößert sich. Ferner kann das Problem auftreten, dass die wenigstens eine optische Linse aus einem Material gefertigt ist, dessen Form und insbesondere dessen Brechungsindex sich bei einer Temperaturerhöhung verändert. Selbst bei einer geringen oder ausbleibenden Änderung des Abstandes der Linse relativ zum optischen Mittel kann der Fokus des Strahlenganges aus der Ebene des optischen Mittels heraus wandern, so dass sich im Ausführungsfall eines Kamerasystems beispielsweise eine Unschärfe ergibt. Ist das optische System als ein Projektionsscheinwerfer für ein Kraftfahrzeug ausgeführt, kann beispielsweise die Hell-Dunkel-Grenze des Abblendlichtes die vorgesehne Lage verlassen, wobei auch Spektraleffekte und eine Unschärfe der Hell-Dunkel-Grenze unerwünschte Effekte darstellen können, die durch eine thermische Beeinflussung des optischen Systems entstehen können.

Aus der DE 10 2005 039 561 A1 ist ein optisches System mit einer Einrichtung zu Kompensation thermischer Einflüsse offenbart. Das optische System besitzt ein Objektivgehäuse zur Aufnahme einer optischen Linse, die als Trägeranordnung ausgebildet ist, und über die die Position der Fokalebene der optischen Linse in der Ebene des optischen Mittels vorgegeben ist. Infolge von Temperaturänderungen kann sich die Trägeranordnung ausdehnen, und der Fokus der optischen Linse wandert aus der Ebene des optischen Mittels heraus, da sich der Abstand zwischen Linse und optischem Mittel ändert. Hierin ist das optische Mittel auf einem Kompensationselement aufgenommen, das ein Gehäuse aufweist, das durch eine rohrartige Seitenwand parallel zur optischen Achse in Form eines Wellschlauches aus Edelstahl, Kupfer oder beispielsweise aus Messing besteht. Um innerhalb des Gehäuses einen verschlossenen Hohlraum zu bilden, weist das Gehäuse zwei planparallele zur optischen Achse senkrecht ausgerichtete Stirnflächen auf, wobei auf einer der Stirnflächen das optische Mittel aufgenommen ist. Die planparallelen Stirnflächen schließen den Wellschlauch an der Unter- bzw. Oberseite hermetisch ab, wobei die Verbindung zum Wellschlauch beispielsweise durch ein jeweiliges Verlöten hergestellt wird. Im Gehäuse ist ein fluides Expansionsmedium eingebracht, wobei es sich um eine inerte Flüssigkeit handeln kann. Dehnt sich die Trägeranordnung aus oder ändert sich die Fokalebene durch eine Temperaturänderung der optischen Linse, so kann das Kompensationselement die Lage des Fokus des Strahlenganges in der Ebene des optischen Mittels korrigieren. Bei einer Temperaturänderung dehnt sich auch das fluide Expansionsmedium entsprechend seinem Volumenausdehnungskoeffizienten aus. Entsprechend wird die Länge des Wellschlauches aufgrund der Flexibilität des Wellschlauches geändert, und es erfolgt eine Nachführung des optischen Mittels durch die Änderung der Länge des Wellschlauches.

Eine derartige Anordnung zur Kompensation thermischer Einflüsse eines optischen Systems weist einen aufwendigen Aufbau aus einer Vielzahl von einzelnen Komponenten auf. Insbesondere ist ein erheblicher Bauraum erforderlich, um das Gehäuse zur Aufnahme des Expansionsmediums im optischen System aufzunehmen. Ferner ist fraglich, ob die thermische Trägheit des Expansionsmediums hinreichend gering ist, um eine geometrische Änderung der Trägeranordnung ohne oder mit nur geringer zeitlicher Verzögerung auszugleichen. Insbesondere dann, wenn eine Wärmebeeinflussung von der Außenseite des optischen Systems erfolgt, ist zu erwarten, dass die zeitgleiche Erwärmung des Expansionsmediums nicht stattfindet und eine Kompensation eines Fehlers in der Fokallage erst nach einiger Zeit zufrieden stellend ermöglicht ist. Zudem reduziert sich durch Anwendung des massegefüllten Wellschlauches die Resonanzfrequenz des Gesamtaufbaus, so dass es bei Schüttelbeanspruchungen leicht zu niederfrequenten Schwingungen der optisch wirksamen Bestandteile untereinander mit unzulässig hohen Amplituden und damit zu temporären Verschiebungen der Fokallage in axiale und/oder radiale Richtung kommen kann.

Weitere Vorrichtungen sind bekannt aus EP 1586927, US 5,557,474 US 1,325,936, JP 57 208 516 und JP 2003 185904*.*

Es ist daher die Aufgabe der vorliegenden Erfindung, ein optisches System mit einer Einrichtung zur Kompensation thermischer Einflüsse zu schaffen, die die Nachteile des vorgenannten Standes der Technik überwindet und eine einfache konstruktive Ausgestaltung aufweist.

Diese Aufgabe wird ausgehend von einem optischen System mit einer Einrichtung zur Kompensation thermischer Einflüsse gemäß dem Oberbegriff des Anspruches 1 in Verbindung mit den kennzeichnenden Merkmalen gelöst. Vorteilhafte Weiterbildungen der Erfindung sind in den abhängigen Ansprüchen angegeben.

Die Erfindung schließt die technische Lehre ein, dass die Trägeranordnung einen Kompensationskörper aufweist, dessen Wärmedehnungskoeffizient derart ausgebildet ist, dass eine wärmedehnungsbedingte Änderung der Fokallage des Strahlenganges relativ zum optischen Mittel durch mechanische Einwirkung des Kompensationskörpers auf die Trägeranordnung ausgleichbar ist.

Die Erfindung geht dabei von dem Gedanken aus, ein optisches System mit einer Einrichtung zur Kompensation thermische Einflüsse zu schaffen, wobei die Einrichtung zur Kompensation der thermischen Einflüsse direkt mit der Trägeranordnung zusammen wirkt. Der Mechanismus zur Kompensation des thermischen Einflusses beruht auf einer Referenz von Wärmeausdehnungskoeffizienten der am Aufbau der Trägeranordnung beteiligten unterschiedlichen Werkstoffe, um eine Temperaturveränderung in eine mechanische Stellbewegung umzuwandeln. Durch eine geeignete geometrische Gestaltung und die geeignete Wahl der jeweiligen Wärmedehnungskoeffizienten der Materialien werden die Richtung und die Größe der Stellbewegung so ausgelegt, dass die Stellbewegung einerseits der thermischen Dehnungsbewegung der Trägeranordnung entgegengesetzt ist und andererseits ein nahezu temperaturunabhängiges Abstandsmaß zwischen dem Objektiv und dem optischen Mittel entsteht.

Durch unterschiedliche Ausdehnungskoeffizienten der Grundstruktur der Trägeranordnung und des Kompensationskörpers kann die Änderung der mechanischen Gestalt der Trägeranordnung derart beeinflusst werden, dass die wärmebedingte Änderung der Fokalebene des Strahlenganges relativ zum optischen Mittel, ausgeglichen wird. Die Trägeranordnung weist einen hohlen und im Wesentlichen rotationssymmetrischen Trägerkörper auf, wobei der Kompensationskörper einen Ringkörper bildet und sich an einer Kompensationsstelle um den Trägerkörper herum erstreckt und mit ihm in zumindest kraftschlüssiger Verbindung steht. Der Trägerkörper kann zumindest einen das Objektiv aufnehmenden inneren Tubus mit einem ersten Durchmesser und einen äußeren zweiten, das optische Mittel aufnehmenden Tubus mit einem größeren zweiten Durchmesser aufweisen, wobei die Durchmesser der Tuben auch in umgekehrter Verteilung vorgesehen sein kann. Es ist jede weitere Kombination eines inneren und eines äußeren Tubus möglich, wobei auch mehr als zwei Tuben zur Bildung des Trägerkörpers möglich sind.

Der innere Tubus erstrecht sich mit einem freien Ende wenigstens geringfügig in den äußeren Tubus hinein, wobei sich zwischen dem inneren Tubus und dem äußeren Tubus eine Membran erstreckt, die in einer Trichterform ausgeführt ist, und wobei sich die Trichterform in Richtung zum optischen Mittel hin verjüngt und so eine gefaltete Anordnung entsteht. Diese trichterförmige oder kegelstumpfförmige Membran sowie der innere und der äußere Tubus können aus einem Kunststoff hergestellt sein, wobei die Membran als Stellglied in Wirkverbindung mit dem Ringkörper dient. Bei der Wahl des Materials des Ringkörpers ist das Verhältnis des Wärmeausdehnungskoeffizienten des Ringkörpers in Bezug auf den Wärmeausdehnungskoeffizienten des Materials der Membran entscheidend für die Stellbewegung. Bei der Wahl des Materials des Ringkörpers ist darauf zu achten, dass der Wärmedehnungskoeffizient der Membran größer ist als der Wärmedehnungskoeffizient des Ringkörpers. Dehnen sich alle an der Trägeranordnung beteiligten Materialien aufgrund einer Temperaturerhöhung aus, so nimmt die Länge sowohl des inneren Tubus als auch des äußeren Tubus zunächst zu. Ferner nimmt die Länge der Membran zu, wobei sich die Zunahme der Membranlänge in einer Verlängerung der Trichterform äußert. Dadurch, dass sich die Trichterform in Richtung zum optischen Mittel hin verjüngt, bewirkt eine Verlängerung der trichterförmigen Membran eine teilweise Rückführung der Längenänderung sowohl des inneren als auch des äußeren Tubus. Erfolgt eine Vergrößerung der Längen des inneren und des äußeren Tubus, nimmt der Abstand zwischen dem optischen Mittel und der optischen Linse zunächst zu.

Die Einrichtung zur Kompensation der thermischen Einflüsse umfasst einen Ringkörper, der an einer vorteilhaften Kompensationsstelle am Trägerkörper angeordnet ist, die im Bereich des Übergangs zwischen dem äußeren Tubus und der Membran ausgebildet ist. Der Ringkörper bildet eine Art Rahmen, so dass sich die trichterförmige Membran nicht wesentlich in radialer Richtung ausdehnen kann. Dies wird erreicht, wenn der Wärmedehnungskoeffizient des Materials des Ringkörpers einen geringen Wert aufweist, der einem geringen Durchmesserzuwachs des Ringkörpers bei einer Temperaturerhöhung entspricht. Eine ähnliche Wirkung wie der Ringkörper im Bereich des Überganges zwischen dem äußeren Tubus und der Membran wird durch die Verbindung der optischen Linse mit dem inneren Tubus erzielt, wobei die optische Linse als Objektiv ausgeführt ist, das gemäß einer möglichen Ausführungsform wenigstens teilweise in den oberen Bereich des inneren Tubus eingeschraubt und anschließend verklebt wird. Bei einer Temperaturerhöhung nimmt der Durchmesser des linsennahen Endes des inneren Tubus folglich nicht wesentlich zu, da das Objektiv einen metallischen Gewinderahmen aufweisen kann, der durch das Verkleben mit dem oberen Ende des inneren Tubus eine radiale Ausdehnung des inneren Tubus verhindert oder zumindest wesentlich reduziert. Folglich können sich nur das linsenfeme Ende des inneren Tubus sowie das linsenferne Ende des äußeren Tubus, das an den Bereich des optischen Mittels angrenzt, radial ausdehnen. Durch die jeweiligen Freiheitsgrade sowohl des inneren als auch des äußeren Tubus sowie der Membran entsteht eine Art Gelenkanordnung, die bei einer Temperaturerhöhung eine Stellbewegung ausführt, die in Wirkverbindung mit dem Ringkörper einen gleich bleibenden Abstand zwischen dem Objektiv und dem optischen Mittel zur Folge hat.

Eine vorteilhafte Ausgestaltung der optischen Linse und des inneren Tubus kann dadurch erreicht werden, dass die optische Linse und der innere Tubus einteilig ausgeführt sind. Die einteilige Ausführung beschreibt dabei vorliegend eine Herstellung der Baugruppe mit dem inneren Tubus und der optischen Linse, die ein einzeln handhabbares Bauteil ermöglicht, das in keinem weiteren Montageprozess ein Fügen der optischen Linse mit dem inneren Tubus erforderlich macht. Insbesondere kann vorgesehen sein, dass der innere Tubus an die optische Linse mittels eines Spritzgussprozesses angespritzt wird oder dass die optische Linse und der innere Tubus mittels eines einstufigen Spritzgussprozesses gemeinsam als einteiliger, materialeinheitlicher Körper hergestellt sind.

Der innere Tubus und die optische Linse können in einem jeweiligen Formgebungsprozess urformend aus einem Kunststoff hergestellt werden. Beispielsweise kann die optische Linse durch einen Spritzgussprozess hergestellt und in einen bereits einsetzbaren Zustand versetzt werden. Anschließend kann der innere Tubus an den Körper der optischen Linse angespritzt werden, so dass eine formschlüssige und vorzugsweise sogar stoffschlüssige Verbindung des Materials des inneren Tubus und des Materials der optischen Linse erzeugt wird.

Gemäß einer weiteren möglichen Ausführungsform kann die optische Linse und der innere Tubus mittels eines einstufigen Spritzgussprozesses gemeinsam als einteiliger, materialeinheitlicher Körper hergestellt werden. Dadurch resultiert nach der Formgebung der optischen Linse und des inneren Tubus ein einstückiges Bauteil, wobei das Material des einstückigen Bauteils an die optischen Anforderungen der optischen Linse angepasst sein kann. Selbstverständlich kann der innere Tubus auch aus einem anderen Werkstoff, beispielsweise einem metallischen Werkstoff, gebildet sein, und die optische Linse wird in einem Spritzgussverfahren an den inneren Tubus angespritzt. In jeden Fall entsteht eine einstückige Konstruktion aus dem inneren Tubus und der optischen Linse, so dass mehrere Vorteile erreicht werden. Insbesondere entfällt eine einzelne Handhabung der optischen Linse im anschließenden Montageverfahren, so dass eine Verunreinigung der optischen Linse und das Erfordernis einer nachfolgenden Reinigung entfallen.

Sind der innere Tubus und die optische Linse in einem einstufigen Spritzgussprozess gemeinsam als einteiliger, materialeinheitlicher Körper hergestellt, kann vorgesehen sein, eine anschließende Oberflächenbehandlung des inneren Tubus vorzusehen. Die Oberfläche des inneren Tubus kann - insbesondere auf der Innenseite - mit einer Beschichtung versehen werden, um optische Spiegelungen innerhalb des inneren Tubus zu vermeiden. Ferner kann im Spritzgussprozess die Oberfläche des inneren Tubus mit einer Rauheit versehen werden, so dass ein milchiger, nur teiltransparenter oder nichttransparenter Bereich entsteht. Weitere Vorteile sind darin zu sehen, dass neben einer Verringerung der Teilevielzahl eine höhere Resistenz gegen mechanische Beanspruchung wie Vibrationen erreicht wird, insbesondere wenn die optische Linse das Objektiv einer Frontkamera bildet, die hinter der Frontscheibe eines Kraftfahrzeugs angeordnet wird. Ferner entfällt das Erfordernis einer lichttechnischen Grundjustage der optischen Linse innerhalb des inneren Tubus. Neben der Verwendung einer einzigen optischen Linse kann auch ein Linsensystem, aufweisend wenigstens zwei optische Linsen, auf die beschriebene Weise einstückig mit dem inneren Tubus ausgeführt werden. Bei nicht einteiliger Ausführung der optischen Linse und des inneren Tubus kann die optische Linse durch ein Fügeverfahren wie einem Löt- einem Schweiß- oder einem Klebeverfahren direkt oder mittels eines Linsenrahmens mit dem inneren Tubus verbunden sein, beispielsweise mittels einer Verschraubung.

Ferner kann das optische Mittel bzw. eine das optische Mittel aufnehmende Trägerplatte einteilig mit dem äußeren Tubus ausgeführt sein. Die Trägerplatte kann dabei materialeinheitlich mit dem äußeren Tubus gefertigt sein.

Wird der Verbund aus dem Trägerkörper und dem Kompensationskörper erwärmt, dehnen sich beide Bauteile in radialer, tangentialer und axialer Richtung aus. Da das Rahmenmaterial einen geringeren Wärmedehnungskoeffizienten aufweist als die Membran, erfährt die Membran bei Erwärmung eine radiale und tangentiale Pressung am Außenumfang. Diese Pressung führt bei einer kegelstumpfförmigen Membran zwangsweise zu einer Axialbewegung des Innenrandes, die dessen normaler thermischer Ausdehnungsbewegung überlagert ist. Es resultiert eine Längenänderung des kegelförmigen Verbundes, die größer ist als die nur thermische Längenänderung des Kegels ohne die durch den Ringkörper verursachte Pressung.

Eine vorteilhafte Ausführungsform der Membran weist eine Struktur auf, die eine hohe Steifigkeit in axialer Richtung und eine niedrige Steifigkeit in tangentialer Richtung besitzt. Der Aufbau der Membran muss nicht rotationssymmetrisch als reiner Kegel ausgeführt sein, sondern kann auch vieleckig oder rechteckig sein.

Bei asymmetrischer Wärmeeinbringung in die Trägeranordnung kann es von besonderem Vorteil sein, wenn die Membran eine um die optische Achse asymmetrisch ausgebildete Gestalt aufweist, derart, dass eine thermisch bedingte Verkippung der optischen Linse über dem optischen Mittel in der Trägeranordnung ausgleichbar ist. Die asymmetrische Gestaltung der Membran kann darin ausgebildet sein, dass die Membran beispielsweise über einem Winkelsegment eine abweichende Materialstärke aufweist. Ferner kann vorgesehen sein, dass die Membran von der Trichterform abweicht, so dass der Winkel des Hohlkegels in einem vorgegebenen Segment vom übrigen Winkel des Hohlkegels abweicht. Desweiteren kann die Membran Strukturelemente besitzen, die beispielsweise in Gestalt von metallischen Körpern wie Stäben oder einem Metallgeflecht auf der Oberfläche der Membran aufgebracht oder in der Membran eingebracht sind, so dass diese beispielsweise in einem Kunststoff-Umspritzungsvorgang in den Kunststoffkörper eingebracht sind, der die Membran bildet.

Die Asymmetrie kann auch in der Trägeranordnung eingebracht sein, wobei sich die Asymmetrie nicht in der Membran wiederfindet, sondern beispielsweise im inneren oder äußeren Tubus. Damit wird der Vorteil erreicht, dass bei einer asymmetrischen Wärmeeinbringung ein Verkippen der optischen Linse relativ zum optischen Mittel ausgeglichen werden kann.

Dient die Trägeranordnung als Bestandteil einer Frontkamera, die innenseitig an einer Windschutzscheibe eines Kraftfahrzeugs angeordnet wird, so kann eine einseitige Wärmeeinstrahlung beispielsweise durch die Sonneneinstrahlung erfolgen. Folglich kann die Trägeranordnung eine über ihrem Umfang variierende Temperatur aufweisen, was zu einer ebenfalls variierenden absoluten Wärmedehnung führt. Weist die Trägeranordnung nun eine entsprechende Asymmetrie, vorzugsweise eine Asymmetrie der Membran, auf, so kann die asymmetrische Ausgestaltung der Trägeranordnung derart an die Temperaturverteilung in der Trägeranordnung angepasst sein, dass eine Verkippung der optischen Linse über dem optischen Mittel vermieden wird.

Die Membran muss nicht geschlossen ausgeführt sein, sondern kann auch aus einzelnen Speichen bestehen, die am Außenumfang durch den Ringkörper zusammengehalten und am Innenumfang durch einen Steg miteinander verbunden werden, so dass eine Felge-Speiche-Nabeanordnung entsteht. Eine Auflösung der Membran in Speichen hat den Vorteil, dass das Spannungsniveau in der Membran durch geringere tangentiale Spannungen deutlich reduziert wird, somit ist das Risiko von Relaxations- und Retardationseffekten in den beteiligten Kunststoffbauteilen signifikant reduziert, die zu einer bleibenden Änderung der Abmessungen und damit der Grundeinstellung führen können. Durch die Auflösung der Membran in Speichen wird der Membranwerkstoff von den Spannungen entlastet, die durch die weitgehende Unterdrückung der tangentialen thermisch bedingten Werkstoffdehnung in einer hohlkegelförmigen, vollflächigen Membran verursacht werden. Allerdings ist die Auflösung der Membran in Speichen mit einer Reduzierung der gewünschten Kompensationsbewegung verbunden, da bei der vollflächigen Membran ein Teil der tangentialen Membrandehnung durch den äußeren mechanischen Zwang aufgrund des aufgebrachten Ringkörpers zusätzlich in eine radiale Membranausdehnung umgewandelt wird, die wegen ihrer teilweisen Unterdrückung durch den Ringkörper einen zusätzlichen axialen Stellweg erzeugen würde. Da in einigen Anwendungsfällen des optischen Systems, beispielsweise als Kamerasystem, die Trägeranordnung eine Gehäusefunktion zu erfüllen hat, ist eine geschlossene Membran erforderlich, wenn ein zusätzliches Bauteil zur Abdeckung der Speichenzwischenräume der Membran vermieden werden soll. Um dennoch eine Reduzierung der Werkstoffanstrengung in der Membran zu erreichen, ist eine spezielle Membranform sinnvoll, bei der die Speichen durch dünnwandige und/oder in axialer Richtung aufgewölbte Membransegmente verbunden sind. Im Fall einer Temperaturerhöhung wird dann die tangentiale Werkstoffausdehnung der Membran durch die Segmente zwischen den radial steifen Speichen in Form einer Beulenbildung aufgenommen, durch eine Aufwölbung der Membransegmente in Richtung des Innenraumes des Kegels kann somit ein Teil des durch die Auflösung in Speichen hervorgerufene Stellwegverlustes kompensiert werden.

Vorteilhafterweise kann der Ringkörper über eine Gewindeanordnung verfügen, so dass dieser außenseitig auf den äußeren Tubus aufgeschraubt wird. Ferner kann der Ringkörper auf den Bereich des Überganges zwischen dem äußeren Tubus und der Membran aufgeschrumpft oder aufgepresst werden, wobei auch ein Umspritzen des Kunststoff-Spritzgussmaterials des Trägerkörpers um den Ringkörper möglich ist. Somit sind verschiedene Möglichkeiten aufgezeigt, den Ringkörper an der genannten Kompensationsstelle mit dem Trägerkörper zu verbinden. Im Falle eines Rotationssymmetrischen Trägerkörpers kann der Ringkörper als einfacher Ring ausgeführt sein, der am Membranaußenumfang am Übergang zum äußeren Tubus kraftschlüssig anliegt. Der Kraftschluss zwischen Ring und Membran muss über den gesamten Betriebstemperaturbereich gewährleistet sein, innerhalb dessen eine Kompensation er forderlich ist. Folglich muss auch bei sehr geringen Temperaturen bereits eine radiale Pressung zwischen dem Ringkörper und dem Aufnahmebereich am Trägerkörper gewährleistet sein. Eine weitere Möglichkeit zur Bildung eines Ringkörpers besteht aus einem gewickelten Draht, der um den Außenumfang der Membran gewickelt wird und aus einem geeigneten Werkstoff besteht, der beispielsweise ein glasfaserverstärkten Kunstharz, einen Metalldraht oder dergleichen umfassen kann. Wird der Draht mit einer vorbestimmten Zugspannung aufgewickelt und werden die freien Drahtenden in geeigneter Weise unter Zug befestigt, kann auch auf diese Weise ein geeigneter Ringkörper gebildet werden. Ferner besteht die Möglichkeit, den Ringkörper als Schelle, beispielsweise aus einem Metallblech, mit einem Schloss auszubilden, wobei das Schloss als Schraubschloss ausgeführt sein kann. Beim Festziehen des Schlosses wird eine dosierte Vorspannung aufgebracht, wie dies aus dem Anwendungsfall einer Schlauchschelle bekannt ist. Auf diese Weise kann auch eine Grundeinstellung des Gesamtsystems erfolgen, wenn kein separates Stellglied dafür vorgesehen ist, die Größe der Fokallänge zu justieren.

Ist der Ringkörper aus einem steifen Vollmaterial ausgeführt, kann dieser innenseitig mit einem Gewinde versehen werden, das eine geringe Kegelöffnung aufweist, alternativ weist das Außengewinde an der Kompensationsstelle des Trägers eine geringe Kegelöffnung auf, oder beide Gewindeteile sind kegelförmig. Folglich kann der Ringkörper durch ein Aufschrauben auf den Trägerkörper aufgebracht werden, wobei auch hier eine Druckvorspannung abhängig von der Aufschraubtiefe eingestellt werden kann. Das Gewinde im Ringkörper kann auch als selbstschneidendes Gewinde gegenüber dem Trägerkörper wirken, sofern dies die Materialfestigkeiten zulassen.

Ohne eine radiale Montagevorspannung des Ringkörpers auf den Trägerkörper vorzusehen, kann der äußere Membranumfang derart ausgeführt werden, dass eine in axialer Richtung geöffnete, umlaufende Nut entsteht, wobei in diese Nut der Ringkörper axial eingepresst wird. Der äußere Membranumfang kann auch derart ausgeführt sein, dass dieser eine in axiale Richtung hervorstehende, umlaufende Feder bildet, wobei auf diese Feder der mit einer passenden Nut versehene Ringkörper axial aufgepresst wird. Der Ringkörper kann in der Nut vereinzelte, am Umfang verteilte Widerhaken aufweisen, die im aufgepressten Zustand ein Abfallen bei Temperaturwechsel verhindern. Auch ein Anbördeln des Ringkörpers an die Feder kann vorgesehen sein. Wird der Ringkörper ferner als steifes Bauteil aus einem geeigneten Kunststoff ausgebildet, kann dieser in einem zweischrittigen Kunststoff-Spritzgussverfahren direkt mit dem Trägerkörper im Spritzguss eingebracht werden.

Gemäß einer weiteren vorteilhaften Ausführungsform verjüngt sich die Trichterform der Membran in Richtung zur optischen Linse nach Art einer gestreckten Anordnung, und der Übergang zwischen der Membran und dem inneren Tubus bildet eine radial nach außen gerichtete Kehle, in der der Ringkörper angeordnet wird. Auch eine Kompensationsstelle zur Anordnung des Ringkörpers im Übergang zwischen der Membran und dem inneren Tubus bewirkt eine Kompensation der Längenänderung durch eine Erwärmung des Trägerkörpers. Der Ringkörper trägt bei dieser gestreckten Anordnung dazu bei, dass der Durchmesser des inneren Tubus im Bereich des Überganges in die Membran nicht oder nicht wesentlich zunimmt, und die thermisch bedingte Verlängerung des inneren Tubus wird durch eine Aufweitung der Membran und des äußeren Tubus kompensiert. Folglich ist der obenstehend beschriebene Mechanismus auch in dem Sinne umkehrbar, dass die innere Membranöffnung von außen eingespannt wird. Ist das optische System als Kamerasystem aufgebaut, hat dies den Vorteil, dass weniger Material für den Trägerkörper verwendet werden muss und die Gesamtanordnung steifer wird, was höhere Resonanzfrequenzen bei Schüttelbelastungen, insbesondere in axialer Richtung, zur Folge hat. Bei dieser Ausführungsvariante werden allerdings hohe radiale Zugspannungen in der Membran erzeugt, so dass eine entsprechend kerbarme Gestaltung vorausgesetzt ist, um Brüche zu vermeiden. Betreffend das Material des Ringkörpers kann dieser aus einem beliebigen Werkstoff wie Metall, Glas, Keramik oder Kunststoff hergestellt sein. Vorteilhaft ist ein Ringkörper-Werkstoff mit möglichst niedrigem Wärmedehnungskoeffizienten und einem hohem E-Modul. Betreffend das Material des Trägerkörpers kann dieser ebenfalls aus einem beliebigen Werkstoff hergestellt sein. Weiterhin von Vorteil ist ein Trägerkörper-Werkstoff mit möglichst hohem Wärmedehnungskoeffizienten, so dass polymere Werkstoffe besonders gut geeignet sind, zumal deren Formgebung zusätzlich mit relativ geringem Aufwand verbunden ist. Der Kompensationskörper kann auch mit wenigstens einem der Tuben einteilig ausgeführt sein, sodass bei entsprechend gefalteter Anordnung von Tuben mit kegelförmiger Membran mit unterschiedlichem Wärmedehnungsverhalten eine Kompensation ermöglicht ist.

Gemäß einer weiteren Ausführungsform des optischen Systems kann sich die Trichterform der Membran in Richtung zur optischen Linse hin verjüngen, wobei die Kompensationsstelle zur Anordnung des Ringkörpers im Übergang zwischen der Membran und dem äußeren Tubus vorgesehen ist. Die sich bei einem derartigen Aufbau ergebende Kompensationsbeviregung unterstützt die Längenzunahme des Trägerkörpers bei Temperaturerhöhung. Jedoch können optische Linsen eingesetzt werden, die insbesondere im Verbund als Objektiv einen Zuwachs der Brennweite bewirken, wenn das Linsensystem sich erwärmt. Dieser Effekt wird insbesondere bei einem Linsensystem aus einem Kunststoffmaterial beobachtet, so dass die Fokalebene hinter dem optischen Mittel liegt. Folglich muss der Abstand zwischen dem optischen Mittel und dem Objektiv vergrößert werden, da die Zunahme der Brennweite stärker wächst als die Zunahme der Länge des Trägerkörpers bei gleicher Temperaturerhöhung. Weist die Trichterform der Membran in Richtung zur optischen Linse und befindet sich die Kompensationsstelle zur Anordnung des Ringkörpers im Übergang zwischen der Membran und dem äußeren Tubus, so wird die Längenzunahme des Trägerkörpers unterstützt, da sich der äußere Tubus nicht radial aufweitet. Folglich kann der Brennweitenzuwachs des Kunststoffobjektives kompensiert werden, und das optische System bleibt fokussiert.

Die erfindungsgemäße Anordnung kann auch für einen Projektionsscheinwerfer eines Kraftfahrzeugs Anwendung finden, sodass das optische System als Lichtmodul des Projektionsscheinwerfers ausgeführt ist. Derartige Lichtmodule weisen ein Leuchtmittel auf, das vorliegend durch das optische Mittel wiedergegeben ist, wobei die optische Linse einen Projektor darstellt, wie dieser für Projektionsscheinwerfer bekannt ist. Die Anordnung aus dem Leuchtmittel und dem Projektor bildet ein Lichtmodul, wie dieses zur Emittierung des Abblendlichtes oder des Fernlichtes eines Scheinwerfers dient.

Eine Kompensation des Abstandes zwischen dem Projektor und dem Leuchtmittel bzw. dem Reflektor zur Reflexion des vom Leuchtmittel emittierten Lichtes kann insbesondere dann erforderlich sein, wenn die Projektorlinse aus einem Kunststoffmaterial hergestellt ist, da sich bei Erwärmung einer Kunststoffoptik eine erhebliche Änderung des Brechungsindex ergeben kann.

Bildet die Trägeranordnung den Verbindungskörper zwischen dem Leuchtmittel und dem Projektor, so kann nicht nur der Abstand zwischen dem Projektor und dem Leuchtmittel bzw. dem Reflektor durch die erfindungsgemäße Trägeranordnung konstant gehalten werden, sondern durch eine asymmetrische Ausgestaltung der Trägeranordnung und insbesondere eine asymmetrischen Ausgestaltung der Membran kann auch bei einer nicht gleichförmigen Wärmeeinbringung in das Lichtmodul ein Verkippen der Lage des Leuchtmittels relativ zur Lage des Projektors ausgeglichen werden. Insbesondere dann, wenn das Leuchtmittel den oberhalb gelegenen Bereich im Lichtmodul stärker erwärmt als den unterhalb gelegenen Bereich, kann eine Verkippung durch eine asymmetrische Gestaltung der Membran ausgeglichen werden, um insbesondere eine Veränderung der Hell-Dunkel-Grenze eines Abblendlichtes wirksam zu vermeiden.

Eine einstückige Ausgestaltung einer oder mehrerer Komponenten eines Kamerasystems zur Bilderfassung oder eines Lichtmoduls eines Scheinwerfers mit der Trägeranordnung ist ebenfalls möglich. Insbesondere kann der innere oder äußere Tubus einteilig mit der optischen Linse ausgeführt sein und/oder der innere oder äußere Tubus ist einteilig mit dem optischen Mittel bzw. Reflektor des Lichtmodus ausgebildet.

Nach einer weiteren Verbesserung der erfindungsgemäßen Ausgestaltung des optischen Systems als Frontkamera in einem Kraftfahrzeug gemäß der ersten Ausführungsform kann die Trägerplatte selbst den äußeren oder inneren Tubus der Trägeranordnung bilden, sodass die Membran an die Trägerplatte angrenzt. Der Kompensationskörper kann dann in der Trägerplatte oder im Übergang zur Membran vorhanden sein. Die trichterförmige Membran kann in zwei Richtungen zwischen dem optischen Mittel und der optischen Linse angeordnet werden, sodass sich diese entweder in Richtung zum optischen Mittel oder in Richtung zur optischen Linse hin verjüngt.

Nach einer weiteren Verbesserung der erfindungsgemäßen Ausgestaltung des optischen Systems als Lichtmodul eines Scheinwerfers gemäß der zweiten Ausführungsform kann die Membran der Trägeranordnung direkt an den Reflektor angrenzen, derart, dass der Reflektor den äußeren oder inneren Tubus selbst bildet. Der Kompensationskörper kann dann im Reflektor vorhanden sein oder der Reflektor weist im Übergangsbereich einen Wärmedehnungskoeffizienten auf, derart, dass der Reflektorrand die Funktion des Kompensationskörpers übernimmt. Die trichterförmige Membran kann auch gemäß dieser Aufführungsform in zwei Richtungen zwischen dem Reflektor und dem Objektiv angeordnet werden, sodass sich diese entweder in Richtung zum Reflektor oder in Richtung zum Objektiv hin verjüngt.

Weiterführend kann vorgesehen sein, dass die optische Linse und der Ringkörper einteilig und/oder materialeinheitlich ausgeführt sind und/oder dass das optische Mittel bzw. eine das optische Mittel aufnehmende Trägerplatte und der Ringkörper einteilig oder materialeinheitlich ausgeführt sind.

Weitere, die Erfindung verbessernde Maßnahmen werden nachstehend gemeinsam mit der Beschreibung eines bevorzugten Ausführungsbeispieles der Erfindung anhand der Figuren näher dargestellt. Es zeigt:
- Fig. 1: ein optisches System mit einer Trägeranordnung gemäß dem Stand der Technik zur Aufnahme einer optischen Linse, die über einem optischen Mittel positioniert ist, wobei das optische System im kalten Zustand darge- stellt ist;
- Fig. 2: ein optisches System gemäß dem Stand der Technik aus Figur 1, wobei durch eine Temperaturerhöhung eine geometrische Verformung der Trä- geranordnung erfolgt ist und der Strahlengang defokussiert dargestellt ist;
- Fig. 3: ein optisches System mit einer Einrichtung zur Kompensation thermischer Einflüsse gemäß der vorliegenden Erfindung, wobei das System bei Raumtemperatur dargestellt ist;
- Fig. 4: ein optisches System gemäß der Figur 3, wobei die Darstellung das Sys- tem nach einer Erwärmung zeigt, und eine Kompensation erfolgt ist;
- Fig. 5: beispielhafte Anordnungen des Ringkörpers am Trägerkörper im Bereich des Überganges des äußeren Tubus in die Membran;
- Fig. 6: ein weiteres Ausführungsbeispiel des optischen Systems mit einer Anord- nung der trichterförmigen Membran, die sich in Richtung zur optischen Linse hin verjüngt und
- Fig. 7: ein weiteres Ausführungsbeispiel eines optischen Systems mit einer Ein- richtung zur Kompensation thermischer Einflüsse, wobei die Kompensati- on eine Änderung der Fokallage durch Temperaturänderung der optischen Linse ausgleicht.

In den Figuren ist das optische System 1 aufgrund der rotationssymmetrischen Gestalt um die optische Achse 5 jeweils im Halbschnitt dargestellt.

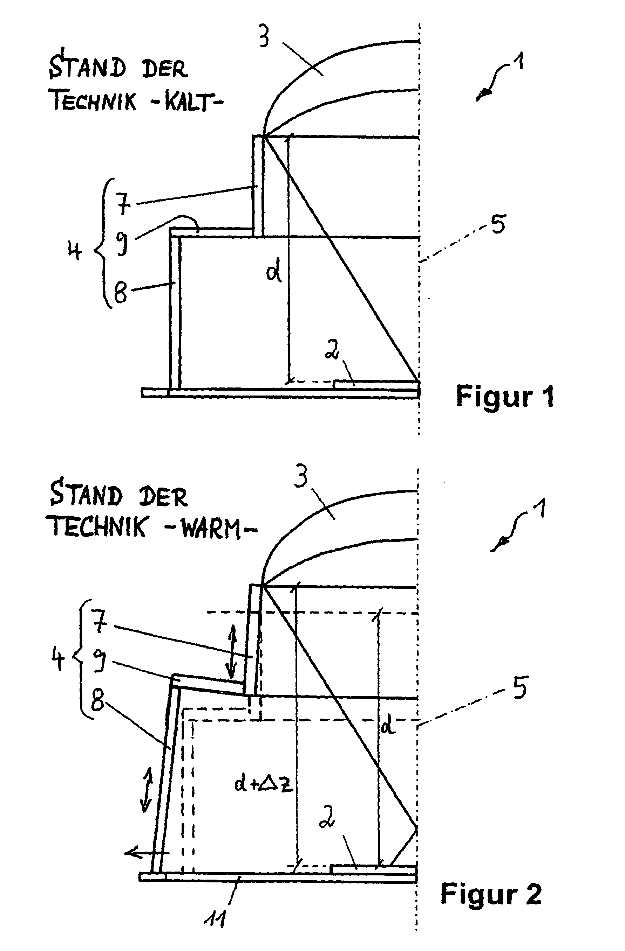

In Figur 1 und Figur 2 ist ein optisches System 1 mit einem optischen Mittel 2 gezeigt, das mit wenigstens einer optischen Linse 3 zusammen wirkt, wie dieses aus dem Stand der Technik bekannt ist. Durch eine Trägeranordnung 4 wird die optische Linse 3 in einem Abstand d über dem optischen Mittel 2 gehalten, wobei sich entlang einer optischen Achse 5 ein Strahlengang erstreckt, der durch die optische Linse 3 in der Ebene des optischen Mittels 2 einen Fokus aufweist. Gemäß Figur 1 befindet sich die Fokallage des Strahlenganges in der Ebene des optischen Mittels 2, und das optische System 1 ist bei Raumtemperatur gezeigt. Aufgrund der Wärmedehnung der an der Trägeranordnung 4 beteiligten Komponenten wie der innere Tubus 7, der äußere Tubus 8 und die Membran 9, ergibt sich bei erhöhter Temperatur ein Zuwachs des Abstandes d durch eine Abstandszunahme Δz. In Figur 2 ist das optische System 1 gemäß dem Stand der Technik bei erhöhter Temperatur dargestellt und der Fokus des Strahlenganges liegt oberhalb des optischen Mittels 2. Daraus ergibt sich das Problem einer Defokussierung des optischen Systems bei einer Temperaturzunahme, so dass eine Kompensation der Abstandszunahme Δz durch eine Einrichtung zur Kompensation thermischer Einflüsse erforderlich ist.

Gemäß der Darstellung in Figur 2 ist erkennbar, dass der innere Tubus 7, der äußere Tubus 8 und die Membran 9 durch eine Erwärmung sowohl einen größeren radialen Durchmesser als auch eine größere axiale Länge einnehmen Ferner resultiert aus den Längenzunahmen der beiden Tuben 7 und 8 im Wesentlichen die Abstandsänderung Δz. Die jeweiligen Verlagerungen der beteiligten Komponenten sind durch Pfeile dargestellt. Die Darstellung fußt auf der Annahme, dass sich der Objektivdurchmesser des Objektivs 3 durch die Erwärmung nicht wesentlich verändert, woraus sich die dargestellten Winkelverzerrungen der Tuben und der Membran im warmen Zustand ergeben.

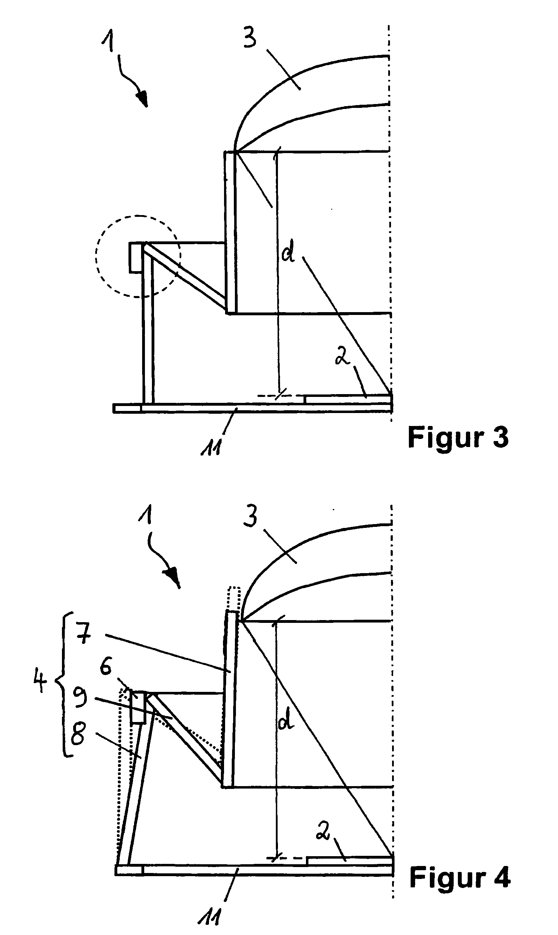

In den Figuren 3 und 4 ist das optische System 1 mit dem optischen Mittel 2 dargestellt, das wiederum auf einer Trägerplatte 11 aufgenommen ist. Figur 3 zeigt das optische System 1 bei Raumtemperatur, wohingegen Figur 4 das optische System 1 nach einer Erwärmung darstellt. Es ist erkennbar, dass sich die Trägeranordnung 4 zwar in Ihrer Geometrie verändert hat, durch die Anordnung eines erfindungsgemäßen Kompensationskörpers 6 im Übergang zwischen dem äußeren Tubus 8 und der Membran 9 wird die Abstandszunahme Δz jedoch kompensiert, so dass der Abstand d zwischen dem optischen Mittel 2 und der optischen Linse 3 des optischen Systems 1 sowohl bei Raumtemperatur als auch bei erhöhter Temperatur erhalten bleibt. Gemäß dieses Ausführungsbeispiels verhindert der erfindungsgemäße Kompensationskörper 6, der als Ringkörper ausgebildet ist und sich um dem Umfang des äußeren Tubus 8 herum erstreckt, eine radiale Ausdehnung des äußeren Tubus 8 im Bereich des Überganges in die Membran 9. Die Lageänderung der Trägeranordnung 4 ohne Kompensationskörper 6 ist gestrichelt dargestellt. Sowohl die Längenänderung des inneren Tubus 7 als auch des äußeren Tubus 8 wird durch eine Stellbewegung der Membran 9 kompensiert, da sich diese in der axialen Länge vergrößert, und eine Rückstellung der Längenänderung des inneren und äußeren Tubus 7 und 8 ermöglicht. Ermöglicht wird dies durch die erfindungsgemäße Ausgestaltung der Membran 9 in einer Trichterform, die sich in Richtung zum optischen Mittel 2 hin verjüngt. Durch die Ausdehnung der Membran 9 erfolgt eine Annäherung des inneren Tubus 7 in Richtung zum optischen Mittel 2, so dass die Längenzunahmen des inneren und äußeren Tubus 7 und 8 ausgleichbar sind. Im Ergebnis bleibt der Abstand d zwischen dem optischen Mittel 2 und der optischen Linse 3 über einen weiten Temperaturbereich konstant.

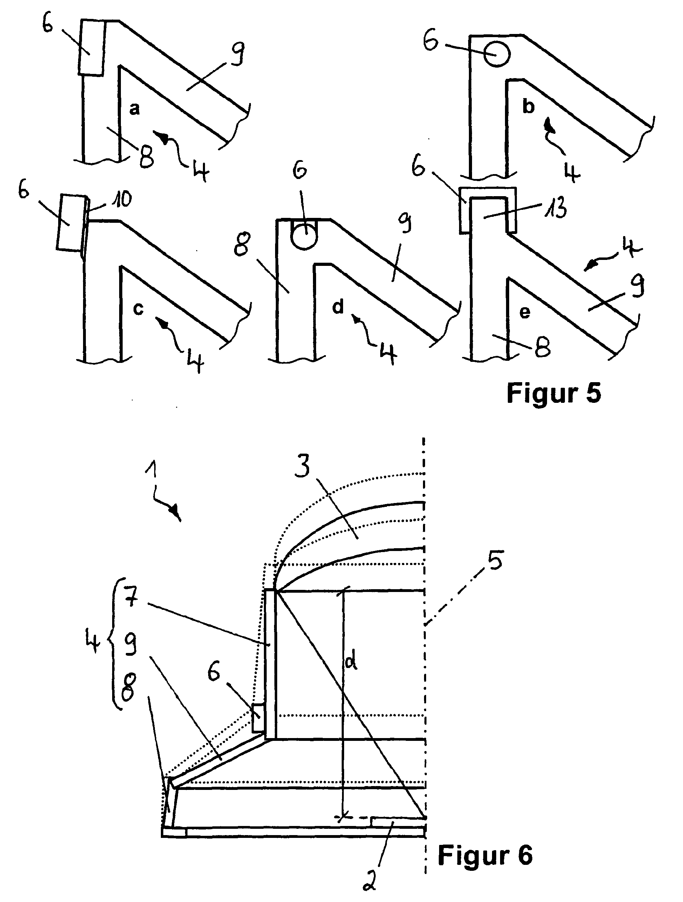

Figur 5 zeigt mehrere Ausführungsbeispiele der Anordnung des Ringkörpers 6 auf der Trägeranordnung im Bereich des Überganges des äußeren Tubus 8 in die Membran 9.

In der Teilfigur 5a ist der Ringkörper 6 auf die Kompensationsstelle aufgepresst, wobei dieser eine leichte Schrägung aufweist, so dass die Radialspannung des Ringkörpers 6 auf den Trägerkörper 4 in Abhängigkeit von der axialen Aufpresstiefe einstellbar ist.

In der Teilfigur 5b ist der Ringkörper 6 in das Material des Trägerkörpers 4 eingebettet, was beispielsweise durch ein zweistufiges Kunststoff-Spritzgussverfahren durch ein Umspritzen des Ringkörpers 6 durch das Material des Trägerkörpers 4 ermöglicht ist.

In der Teilfigur 5c ist der Ringkörper 6 mit einer Gewindeanordnung 10 versehen, durch die dieser auf den Trägerkörper 4 aufschraubbar ist. Auch hier ist der Ringkörper 6 mit einer leichten Kegelöffnung versehen, so dass die radiale Vorspannung auf den Trägerkörper 4 durch die axiale Tiefe der Einschraubung des Ringkörpers 6 auf den Trägerkörper 4 vorbestimmbar ist.

In der Teilfigur 5d ist eine weitere Möglichkeit der Aufnahme des Ringkörpers 6 im Trägerkörper 4 dargestellt, wobei der Ringkörper 6 von der Oberseite in die Stelle des Überganges zwischen dem äußeren Tubus 8 und der Membran 9 einsetzbar ist. Der Ringkörper 6 kann hierbei in eine Aufnahmenut eingepresst werden, die in Richtung zur Oberseite des Trägerkörpers 4 weist und in Umfangsrichtung umläuft.

In der Teilfigur 5e ist ein weiteres Ausführungsbeispiel der Anordnung des Ringkörpers 6 auf dem Trägerkörper 4 dargestellt, wobei der Ringkörper 6 eine U-förmige Gestalt aufweist und auf einem Absatz 13 aufgebracht ist, der an den Übergang zwischen dem äußeren Tubus 8 und der Membran 9 des Trägerkörpers 4 angeordnet ist.

In der Figur 6 ist ein weiteres Ausführungsbeispiel des optischen Systems 1 mit einer Einrichtung zur Kompensation thermischer Einflüsse dargestellt. Gemäß dieses Ausführungsbeispieles weist die Trägeranordnung 4 wiederum einen inneren Tubus 7, einen äußeren Tubus 8 sowie eine Membran 9 auf, wobei sich die Trichterform der Membran 9 in Richtung zur optischen Linse 3 hin verjüngt und der Übergang zwischen der Membran 9 und dem inneren Tubus 7 eine radial nach außen gerichtete Kehle bildet, in der der Ringkörper 6 angeordnet ist. Eine Änderung der Geometrie des Trägerkörpers 4 und eine Lageänderung der optischen Linse 3 ohne einen Ringkörper 6 ist durch gestrichelte Linien dargestellt. Aufgrund der Anordnung des Ringkörpers 6 in der Kehle zwischen dem inneren Tubus 7 und der Membran 9 wird eine radiale Pressung des Ringkörpers 6 in die Kehle eingeleitet, und der Durchmesser des inneren Tubus 7 kann im Übergangsbereich zur Membran 9 auch bei einer Erhöhung der Temperatur nicht zunehmen. Die Längenänderung des inneren Tubus 7 wird durch eine Aufweitung des äußeren Tubus 8 und der Membran 9 kompensiert, so dass im Ergebnis die Lage der optischen Linse 3 über dem optischen Mittel 2 temperaturunabhängig den gleichen Abstand d in Richtung der optischen Achse 5 behält. Damit ist ein weiteres Ausführungsbeispiel der Anordnung des Ringkörpers 6 in der Kehle zwischen dem inneren Tubus 7 und der Membran 9 gezeigt, wobei gemäß der vorliegenden Erfindung auch mehrere Ringkörper 6 am Trägerkörper 4 angeordnet werden können.

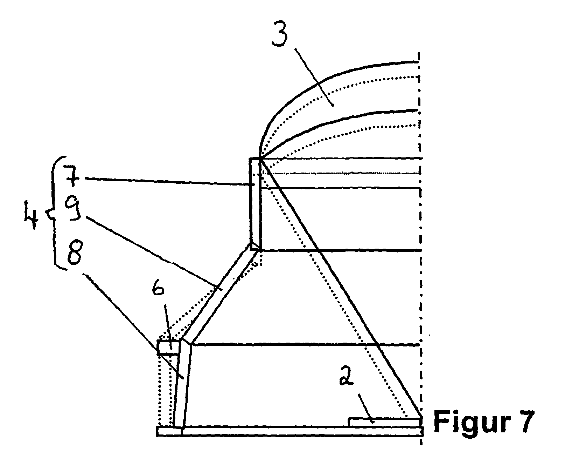

In Figur 7 ist ein optisches System 1 gezeigt, in dem eine Kompensation der Gestaltänderung des Trägerkörpers 4 in Richtung zur Längenänderung des Abstandes zwischen dem optischen Mittel 2 und der optischen Linse 3 erfolgt. Dies ist dann erforderlich, wenn die optische Linse 3 ein aktives Temperaturverhalten aufweist, und sich die Fokallänge mit wachsender Temperatur vergrößert. Erfolgt keine oder nur eine zu geringe Nachstellung des Abstandes der optischen Linse 3 zum optischen Mittel 2, so liegt die Fokalebene der optischen Linse 3 unterhalb des optischen Mittels 2, obwohl die Trägeranordnung 4 eine Längenänderung aufweist. Folglich ist es wünschenswert, die Längenänderung der Trägeranordnung 4 weiter zu verstärken, um die größere Zunahme der Fokallänge der optischen Linse 3 auszugleichen. In gestrichelter Form ist das optische System 1 nach einer Erwärmung ohne die Anordnung eines Ringkörpers 6 gezeigt, wobei die Längenänderung des Trägerkörpers 4 die Zunahme der Brennweite der optischen Linse 3 nicht vollständig ausgleicht. Folglich liegt der Fokus der optischen Linse 3 unterhalb des optischen Mittels 2, so dass eine Defokussierung stattfindet. Durch die Anordnung eines Ringkörpers 6 im Bereich des Überganges des äußeren Tubus 8 in die Membran 9 wird die Längenänderung des Trägerkörpers 4 weiter verstärkt, so dass der Fokus der optischen Linse 3 in die Ebene des optischen Mittels 2 in Richtung zur optischen Achse 5 nachgeführt werden kann. Damit ist ein weiteres Beispiel aufgezeigt, das die Einrichtung zur Kompensation thermischer Einflüsse eine positive Zunahme der Länge der Trägeranordnung 4 nicht nur in einer entgegenwirkenden Weise kompensieren kann, sondern dass auch optische Effekte, beispielsweise die Zunahme der Fokallänge eines Objektives 3, durch Verstärkung der Längenzunahme der Trägeranordnung 4 effektiv ausgeglichen werden kann.

Das optische System 1 beschränkt sich nicht auf die Anwendung als Kamerasystem oder als Projektionsscheinwerfer für ein Kraftfahrzeug. Grundsätzlich kann das optische System 1 als eine Aufnahme einer optischen Linse 3 in Gestalt eines Objektives verstanden werden, wobei die Anordnung des Objektives 3 über jedem beliebig ausgeführten optischen Mittel 2 erfolgen kann.

### Bezugszeichenliste

- 1: optisches System
- 2: optisches Mittel
- 3: optische Linse
- 4: Trägersystem
- 5: optische Achse
- 6: Kompensationskörper, Ringkörper
- 7: innerer Tubus
- 8: äußerer Tubus
- 9: Membran
- 10: Gewindeanordnung
- 11: Trägerplatte
- 12: Aufnahmenut
- 13: Absatz

- d: Abstand
- Δz: Abstandszunahme

## Patentansprüche

1. Optisches System (1) mit einem optischen Mittel (2), welches als Bilderfassungsmittel oder Leuchtmittel ausgebildet ist, und mit wenigstens einer optischen Linse (3),
wobei das optische Mittel (2) mit der optischen Linse (3) zusammenwirkt, die durch eine Trägeranordnung (4) in einem Abstand (d) zum optischen Mittel (2) aufgenommen ist und wobei sich entlang einer optischen Achse (5) ein Strahlengang erstreckt, der durch die optische Linse (3) am Ort des optischen Mittels (2) einen Fokus aufweist,
wobei die Trägeranordnung (4) einen Kompensationskörper (6) aufweist, dessen Wärmedehnungskoeffizient derart ausgebildet ist, dass eine wärmedehnungsbedingte Änderung der Fokalebene des Strahlengangs relativ zum optischen Mittel (2) durch mechanische Einwirkung des Kompensationskörper (6) auf die Trägeranordnung (4) ausgleichbar ist,
wobei die Trägeranordnung (4) einen hohlen Trägerkörper (4) aufweist, der wenigstens einen die optische Linse (3) aufnehmenden inneren Tubus (7) mit einem ersten Durchmesser und einen äußeren Tubus (8) mit einem größeren Durchmesser aufweist,
**dadurch gekennzeichnet dass**,
eine Membran (9) sich zwischen dem inneren Tubus (7) und dem äußeren Tubus (8) erstreckt, die eine Trichterform aufweist, die sich in Richtung zum optischen Mittel (2) hin verjüngt,
und dass der Kompensationskörper (6) einen Ringkörper (6) bildet, dessen Wärmedehnungskoeffizient kleiner ist als der der Membran (9), und sich an einer Kompensationsstelle um den Trägerkörper (4) herum erstreckt, so dass er eine radiale Ausdehnung des äußeren Tubus (8) im Bereich des Übergangs in die Membran (9) verhindert,
wobei durch die jeweiligen Freiheitsgrade sowohl des inneren (7) als auch des äußeren Tubus (8) sowie der Membran (9) eine Art Gelenkanordnung entsteht, die bei einer Temperaturerhöhung eine Stellbewegung ausführt, die in Wirkverbindung mit dem Ringkörper (6) einen gleich bleibenden Abstand zwischen optischer Linse (3) und dem optischen Mittel zur Folge hat.

2. Optisches System (1) nach Anspruch 1, **dadurch gekennzeichnet, dass** die Kompensationsstelle im Bereich des Übergangs zwischen dem äußeren Tubus (8) und der Membran (9) ausgebildet ist, sodass der Ringkörper (6) in diesem Bereich des Trägerkörpers (4) in oder an diesem angeordnet ist.

3. Optisches System (1) nach einem der Ansprüche 1 oder 2, **dadurch gekennzeichnet, dass** der Ringkörper (6) über eine kegelförmige Gewindeanordnung (10) außenseitig auf den äußeren Tubus (8) aufgeschraubt ist.

4. Optisches System (1) nach einem der Ansprüche 1 oder 2, **dadurch gekennzeichnet, dass** der Ringkörper (6) auf den Bereich des Übergangs zwischen dem äußeren Tubus (8) und der Membran (9) aufgeschrumpft oder aufgepresst ist. presst ist.

5. Optisches System (1) nach einem der Ansprüche 1 oder 2 **dadurch gekennzeichnet, dass** der Ringkörper (6) im Bereich des Übergangs zwischen dem äußeren Tubus (8) und der Membran (9) mit dem Material des Trägerkörpers (4) mittels eines Kunststoff-Spritzgussverfahrens umspritzt ist.

6. Optisches System (1) nach einem der vorgenannten Ansprüche, **dadurch gekennzeichnet, dass** der Übergang zwischen der Membran (9) und dem inneren Tubus (7) eine radial nach außen gerichtete Kehle bildet, in der der Ringkörper (6) angeordnet ist.

7. Optisches System (1) nach einem der Ansprüche 1 bis 5, **dadurch gekennzeichnet, dass** die Kompensationsstelle zur Anordnung des Ringkörpers (6) im Übergang zwischen der Membran (9) und dem äußeren Tubus (7) vorgesehen ist.

8. Optisches System (1) nach einem der vorgenannten Ansprüche, **dadurch gekennzeichnet, dass** das optische Mittel (2) als Bilderfassungsmittel ausgeführt ist, wobei das optische System (1) ein Kamerasystem für ein Kraftfahrzeug ist.

9. Optisches System (1) nach einem der Ansprüche 1 bis 7, **dadurch gekennzeichnet, dass** das optische Mittel (2) als Leuchtmittel ausgeführt ist, wobei das optische System (1) ein Projektionsscheinwerfer für ein Kraftfahrzeug ist.

10. Optisches System (1) nach einem der vorgenannten Ansprüche, **dadurch gekennzeichnet, dass** die Membran (9) eine um die optische Achse (5) asymmetrisch ausgebildete Gestalt aufweist, derart, dass eine thermisch bedingte Verkippung der optischen Linse (3) über dem optischen Mittel (2) in der Trägeranordnung (4) ausgleichbar ist.

11. Optisches System (1) nach einem der vorgenannten Ansprüche, **dadurch gekennzeichnet, dass** die optische Linse (3) und der innere (7) oder äußere (8) Tubus einteilig und materialeinheitlich ausgeführt sind und dass das optische Mittel (2) bzw. eine das optische Mittel (2) aufnehmende Trägerplatte (11) einteilig und materialeinheitlich mit dem inneren (7) oder äußeren Tubus (8) ausgeführt ist.

## Claims

1. Optical system (1) with an optical means (2) being formed as an image recording means or a lighting means, and having at least an optical lens (3),
wherein the optical means (2) works together with the optical lens (3) being received by a holder arrangement (4) at a distance (d) relative to the optical means (2) and wherein a light path having a focus due to the optical lens (3) in the location of the optical means (2) extends along an optical axis (5),
wherein the holder arrangement (4) has a compensating element (6), whose thermal expansion coefficient is such that a change of the focal plane of the light path relative to the optical means (2) caused by thermal expansion is compensable by the mechanical action of the compensating element (6) on the holder arrangement (4),
wherein the holder arrangement (4) has a hollow holder body (4) having at least an inner tube (7) with a first diameter receiving an optical lens (3)and an outer tube (8) with a larger diameter,
**characterized in that**
a funnel-shaped membrane (9) extends between the inner tube (7) and the outer tube (8)and tapers down toward the optical means (2),
and that the compensating element (6) forms a ring body (6), whose thermal expansion coefficient is smaller than that of the membrane (9), and which extends around the holder body (4) in a compensation point, so that it prevents a radial expansion of the outer tube (8) in the region of the transition into the membrane (9),
wherein the respective degrees of freedom of the inner (7) as well as of the outer tube (8) and the membrane (9) generate, when the temperature rises, a kind of articulation arrangement executing an actuation, which, in operative interaction with the ring body (6), leads to a consistent distance between the optical lens (3) and the optical means.

2. Optical system (1) according to claim 1, **characterized in that** the compensation point is formed in the region of the transition between the outer tube (8) and the membrane (9), so that the ring body (6) is arranged in or on it in this region of the holder body (4).

3. Optical system (1) according to one of the claims 1 or 2, **characterized in that** the ring body (6) is screwed onto the outside of the outer tube (8) by means of a conical threading arrangement (10).

4. Optical system (1) according to one of the claims 1 or 2, **characterized in that** the ring body (6) is shrunk or pressed onto the region of the transition between the outer tube (8) and the membrane (9).

5. Optical system (1) according to one of the claims 1 or 2, **characterized in that** the ring body (6) is overmolded with the material of the holder body (4) in the region on the transition between the outer tube (8) and the membrane (9) by means of a plastic injection-molding process.

6. Optical system (1) according to one of the above claims, **characterized in that** the transition between the membrane (9) and the inner tube (7) forms a radial groove facing outward, in which the ring body (6) is arranged.

7. Optical system (1) according to one of the claims 1 to 5, **characterized in that** the compensation point for the arrangement of the ring body (6) is provided in the transition between the membrane (9) and the outer tube (7).

8. Optical system (1) according to one of the above claims, **characterized in that** the optical means (2) is embodied as an image recording means, wherein the optical system (1) is a camera system for a motor vehicle.

9. Optical system (1) according to one of the claims 1 to 7, **characterized in that** the optical means (2) is embodied as a light source, wherein the optical system (1) is a projector-type headlamp for a motor vehicle.

10. Optical system (1) according to one of the above claims, **characterized in that** the membrane (9) has an asymmetric shape extending around the optical axis (5), in such a manner that a thermally induced tilting of the optical lens (3) above the optical means (2) in the holder arrangement (4) is compensatable.

11. Optical system (1) according to one of the above claims, **characterized in that** the optical lens (3) and the inner (7) or the outer tube (8) are executed in one piece and made from a uniform material and that the optical means (2) or a holding plate (11) receiving the optical means (2) is executed in one piece and made from a uniform material with the inner (7) or the outer tube (8).

## Revendications

1. Système optique (1) avec un moyen optique (2) qui est réalisé en tant que moyen d'enregistrement de l'image ou moyen d'éclairage et avec au moins une lentille optique (3),
le moyen optique (2) étant en interaction avec la lentille optique (3) qui est supportée par un ensemble de support (4) à une distance (d) par rapport au moyen optique (2) et une trajectoire du rayon s'étendant le long d'un axe optique (5) qui présente un foyer à travers la lentille optique (3) sur l'endroit du moyen optique (2),
l'ensemble de support (4) présentant un corps de compensation (6) dont le coefficient de dilatation thermique est réalisé de telle manière qu'une modification due à la dilatation thermique du plan focal de la trajectoire du rayon par rapport au moyen optique (2) puisse être compensée par une intervention mécanique du corps de compensation (6) sur l'ensemble de support (4),
l'ensemble de support (4) présentant un corps de support creux (4) qui présente au moins un tube intérieur (7) avec un premier diamètre intégrant la lentille optique (3) et un tube extérieur (8) avec un diamètre plus grand,
**caractérisé en ce**
**qu'**une membrane (9) en forme d'entonnoir s'étend entre le tube intérieur (7) et le tube extérieur (8), qui s'effile en direction vers le moyen optique (2),
et **que** le corps de compensation (6) forme un corps circulaire (6) dont le coefficient de dilatation thermique est inférieur à celui de la membrane (9) et qui s'étend sur un lieu de compensation autour du corps de support (4) de manière à empêcher une dilatation radiale du tube extérieur (8) dans la zone de passage à la membrane (9),
les degrés de liberté respectifs du tube intérieur (7) et du tube extérieur (8) et de la membrane (9) formant une sorte d'ensemble d'articulation qui lorsque la température augmente réalise un mouvement de réglage qui en relation d'effet avec le corps circulaire (6) implique une distance constante entre la lentille optique (3) et le moyen optique.

2. Système optique (1) selon la revendication 1, **caractérisé en ce que** le lieu de compensation se trouve dans la zone de passage entre le tube extérieur (8) et la membrane (9) de sorte que le corps circulaire (6) dans cette zone du corps de support (4) soit disposé dans ou sur ce dernier.

3. Système optique (1) selon l'une des revendications 1 ou 2, **caractérisé en ce que** le corps circulaire (6) est vissé sur le côté extérieur du tube extérieur (8) par un ensemble d'articulation conique (10).

4. Système optique (1) selon l'une des revendications 1 ou 2, **caractérisé en ce que** le corps circulaire (6) est fretté ou pressé sur la zone de passage entre le tube extérieur (8) et la membrane (9).

5. Système optique (1) selon l'une des revendications 1 ou 2, **caractérisé en ce que** le corps circulaire (6) est enrobé avec la matière du corps de support (4) dans la zone de passage entre le tube extérieur (8) et la membrane (9) par un procédé d'injection pour les matières plastiques.

6. Système optique (1) selon l'une des revendications mentionnées ci-dessus, **caractérisé en ce que** le passage entre la membrane (9) et le tube intérieur (7) forme une gorge radialement dirigée vers l'extérieur dans laquelle se trouve le corps circulaire (6).

7. Système optique (1) selon l'une des revendications 1 à 5, **caractérisé en ce que** le lieu de compensation est prévu pour le positionnement du corps circulaire (6) dans la zone de passage entre la membrane (9) et le tube extérieur (7).

8. Système optique (1) selon l'une des revendications mentionnées ci-dessus, **caractérisé en ce que** le moyen optique (2) est réalisé en moyen d'enregistrement de l'image, le système optique (1) étant un système à caméra pour un véhicule automobile.

9. Système optique (1) selon l'une des revendications 1 à 7, **caractérisé en ce que** le moyen optique (2) est un moyen d'éclairage, le système optique (1) étant un projecteur à technologie elliptique pour un véhicule automobile.

10. Système optique (1) selon l'une des revendications mentionnées ci-dessus, **caractérisé en ce que** la membrane (9) présente une forme asymétrique autour de l'axe optique (5) de sorte qu'un basculement résultant de la thermique de la lentille optique (3) au-dessus du moyen optique (2) dans l'ensemble de support (4) puisse être compensé.

11. Système optique (1) selon l'une des revendications mentionnées ci-dessus, **caractérisé en ce que** la lentille optique (3) et le tube intérieur (7) ou extérieur (8) sont réalisés en une pièce et de matière unique et que le moyen optique (2) ou bien une plaque support (11) intégrant le moyen optique (2) sont réalisés en une pièce et de matière unique avec le tube intérieur (7) ou extérieur (8).
